# EUROPEAN PATENT SPECIFICATION

(11) **EP 2 416 303 B1**
(45) Date of publication and mention of the grant of the patent: **11.04.2018**
(21) Application number: 11176402.3
(22) Date of filing: 03.08.2011
(51) Int. Cl.: E01F 9/30, B60W 30/12, G08G 1/0967, G05D 1/02

(54) **Method for forming a road mark**
Verfahren zur Anfertigung einer Straßenmarkierung
Procédé pour former une marque de route

(30) Priority: 06.08.2010 JP 2010176898
(43) Date of publication of application: 08.02.2012
(73) Proprietor: Hitachi, Ltd., Chiyoda-ku Tokyo 100-8280 (JP)
(72) Inventor: Ono, Yukihiko, Tokyo 100-8220 (JP)
(74) Representative: Beetz & Partner mbB

(56) References cited:
- WO-A1-96/16231
- CA-A1- 2 289 549
- GB-A- 1 345 329
- GB-A- 2 056 745
- US-A- 3 837 756
- US-A- 4 800 978
- US-A1- 2007 048 084
- US-B1- 6 378 772

## Description

The present invention relates to a cruise assist system for a vehicle. More specifically, the present invention relates to a technology which ensures the vehicle to stop at a stop line and to conduct self-location estimation.

### Background

Recently, the vehicle has been equipped with various types of units for improving safety during driving. For example, there is a technology that has been put into practical use for extracting the boundary of the traffic lane such as a white line from video images captured by an onboard camera when the vehicle is traveling on the expressway, and using an estimated current position in the lateral direction for alarm and control.

Especially when the vehicle is traveling on the open road, the stop line marked on the road to the front of the crosswalk and intersection has to be recognized so that the vehicle is stopped. Japanese Unexamined Patent Publication No. 2003-85562 discloses the technology relevant to the stop line recognizing unit which determines with respect to existence of the stop line in reference to the image input from the CCD camera.

Meanwhile, Japanese Unexamined Patent Publication No. 9-152348 discloses the method for correcting the current location of the vehicle by making a comparison between the map information and information extracted from the image captured by the onboard camera, for example, traffic light, sign, number of lanes, and road width.

Generally, determination with respect to existence of the stop line has been made based on the image input from the camera. However, it is difficult to determine with respect to existence of the stop line in reference to the image if the stop line is unclear owing to dirt, fallen leaves, sands or snow. The method for correcting the current position by making a comparison between the map information and information of the road mark and traffic sign derived from the image captured by the onboard camera depends on weather. This applies to the method for obtaining the vehicle self-location using the general GPS positioning. So approach capable of providing the self-location with great accuracy irrespective of weather is highly demanded.

The document WO 96/16231 discloses a method for forming magnetizable road marks according to the preamble of claim 1. The documents US 3 837 756 A and GB 1345 329 A disclose examples of magnetizable structures extending along a roadway.

### Summary

The present invention ensures a vehicle such as an automobile to stop at the stop line, and allows the vehicle to estimate self-location. For example, the present invention provides a a method for forming a road mark as defined in claim 1. Advantageous embodiments of the invention are defined in the dependent claims.

The present invention relevant to a vehicle such as an automobile ensures the vehicle to stop at the stop line, and allows the self-location estimation. In the case where weather interferes with determination with respect to existence of the stop line in reference to the captured image of the road surface, it is generally difficult to detect the stop line position. As described by the following examples, the present invention is capable of stopping the vehicle at the stop line by detecting its position irrespective of weather, and further obtaining the self-location of the vehicle with great accuracy as well.

### Brief Description of the Drawings

Fig. 1 is an explanatory view of a structure of a cruise assist system for vehicle according to an example related to the present invention;
Fig. 2 is an explanatory view of a stop line as an element of the structure according to the example related to the present invention;
Fig. 3 is an explanatory view of a functional structure of a vehicle as an element of the structure according to the example related to the present invention;
Fig. 4 is an explanatory view of components of the vehicle according to the example related to the present invention;
Fig. 5 is an explanatory view showing an external sensor and an internal sensor installed in the vehicle according to the example related to the present invention;
Fig. 6 is an explanatory view with respect to estimation of the position of the stop line which contains magnetic particles, and the vehicle self-location estimation using the stop line according to the example related to the present invention;
Fig. 7 is an explanatory view with respect to integration of positions of the stop line that contains magnetic particles, which have been acquired by a plurality of vehicles, and the vehicle self-location estimation using the stop line according to the example related to the present invention;
Fig. 8 is an explanatory view representing a method for measuring a position of the stop line that contains magnetic particles according to the example related to the present invention;
Fig. 9 is an explanatory view representing a method for measuring a direction of the stop line which contains magnetic particles according to the example related to the present invention;
Fig. 10 is an explanatory view representing a method for measuring a position of the stop line according to the example related to the present invention;
Fig. 11 is an explanatory view showing a structure of a stop line according to Example 2;
Fig. 12 is an explanatory view showing a structure of the stop line and a magnetic detection sensor according to Example 3;
Fig. 13 is an explanatory view showing magnetic nails which guide the vehicle to the stop line according to Example 5;
Fig. 14 is an explanatory view showing a magnetic line which guides the vehicle to the stop line according to Example 5; and
Fig. 15 is an explanatory view of Example 8.

### Description of the Preferred Examples

Examples according to the present invention will be described referring to the drawings.

### Example 1

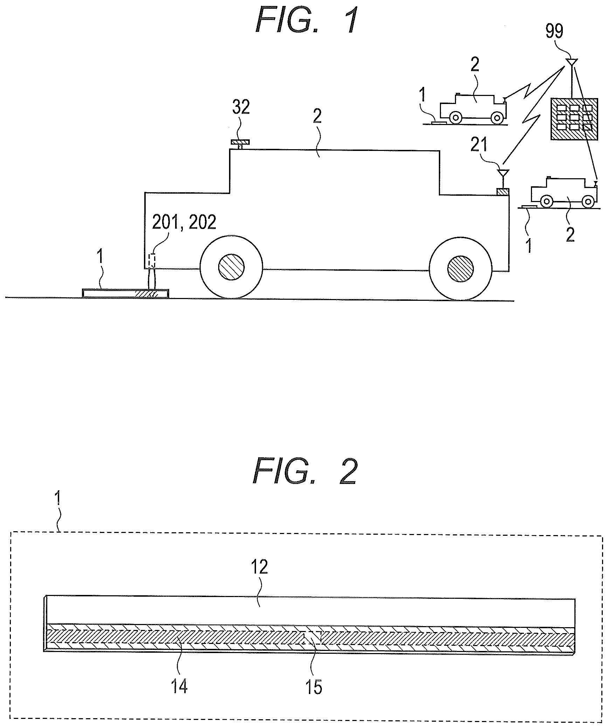

An example related to the present invention will be described referring to Figs. 1 to 9.

Fig. 1 shows a structure of a cruise assist system for a vehicle according to the example, taking a stop line as a road mark. The system of the example includes a stop line 1 which contains a plurality of magnetic particles, and a plurality of vehicles 2 which stop upon detection of the stop line 1, and measure position and direction of the stop line 1, and a stop line position control server 99 which controls stop line position information measured by the plurality of vehicles. Each of the vehicles 2 includes a stop line detection magnetic sensor 201, a stop line position measurement magnetic sensor 202, a positioning unit 32, and a communication unit 21 for communication with the stop line position control server 99.

The stop line 1 will be described referring to Fig. 2. The stop line 1 includes a visual mark 12 formed by the method according to the invention by applying white paint on the road surface likewise the general road mark, and a magnetic detection mark 14 having the line extending in parallel with a long side 12a of the visual mark 12, which is formed by mixing the paint of the same color type as that of the road surface and the magnetic particles.

The generally employed paint for the road mark in accordance with types 1 to 3 of JIS K5665 may be used as the paint of white type used for the visual mark 2. Preferably, the paint contains glass beads that exhibit retoreflective properties and the light accumulating pigment which provides emission brightness at night.

Use of the material with low surface reflectance for forming the magnetic detection mark 14 makes the contrast with respect to the surface of the visual mark 12 high, thus allowing the driver and the camera to easily detect the visual mark 12. Preferably, black type pigment is mixed with the generally employed material for forming the road mark as well as delustering agent.

The magnetic detection mark 14 includes a position detection reference portion 15 which does not contain the magnetic particles for the purpose of indicating the longitudinal reference position, and is detected by the stop line position measurement magnetic sensor 202 as shown in Fig. 1.

The magnetic detection mark 14 may be formed by fusing the member with which the ferromagnetic body is mixed to the road surface so as to be magnetized using a magnetizing unit rather than applying the member mixed with the magnetic particles directly to the road surface. This makes it possible to improve durability of the road mark through fusing, and avoid demagnetization effect under heat resulting from fusing.

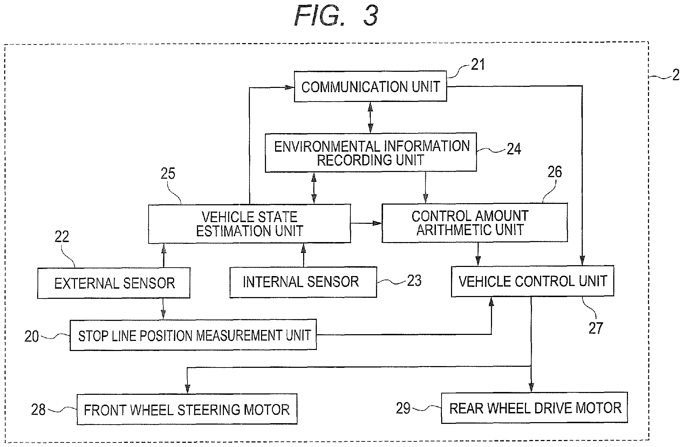

The vehicle 2 will be described referring to Fig. 3. The vehicle 2 includes a stop line position measurement unit 20, a communication unit 21, an external sensor 22, an internal sensor 23, an environmental information recording unit 24, a vehicle state estimation unit 25, a control amount arithmetic unit 26, a vehicle control unit 27, a front wheel steering motor 28, and a rear wheel drive motor 29, which are connected via control lines or information lines as shown in Fig. 3.

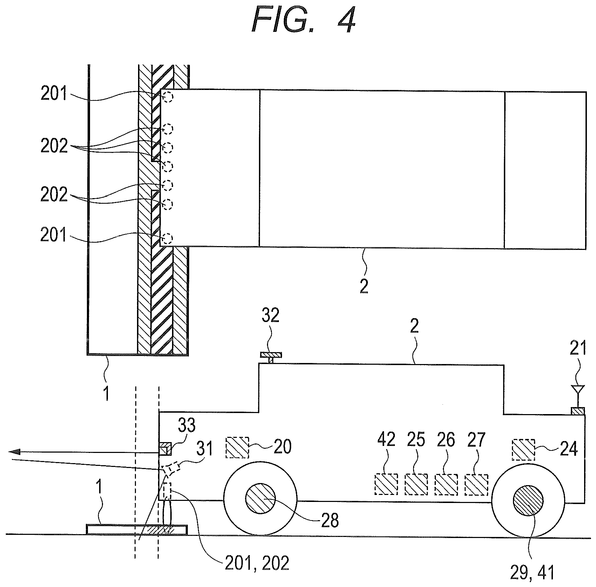

Referring to Fig. 4, the external sensor 22, the internal sensor 23 which are installed in the vehicle, and the vehicle state estimation unit 25 for processing information data of those sensors will be described. The structure according to the example uses the external sensor 22 formed of the stop line detection magnetic sensors 201 for detecting the stop line 1 to stop the vehicle, the stop line position measurement magnetic sensors 202 for measuring the position of the stop line in reference to the vehicle coordinate system, a TV camera 31 for capturing the image ahead of the vehicle, a positioning unit 32 for measuring the self-location of the vehicle in a global coordinate system, and a circumference observation unit 33 mounted on a front part of the vehicle. The structure uses the internal sensor 23 formed of an encoder 41 and a vehicle attitude sensor 42. The vehicle state estimation unit 25 serves to estimate the vehicle location, orientation, speed, and an obstacle position based on data resulting from use of the external sensor 22 and the internal sensor 23.

The stop line position measurement unit 20 obtains position and direction of the stop line using outputs of the stop line detection magnetic sensor 201 and the stop line position measurement magnetic sensor 202, and the vehicle location in the global coordinate system derived from the positioning unit 32. The positioning unit 32 may be realized through scan matching using GNSS (Global Navigation Satellite System) and laser scanner.

The stop line position measurement unit 20 allows the environmental information recording unit 24 to record data with respect to position and direction of the stop line which have been measured a plurality of times in a stopped state, and subjects the accumulated data to the statistical process for estimating the position and direction of the stop line.

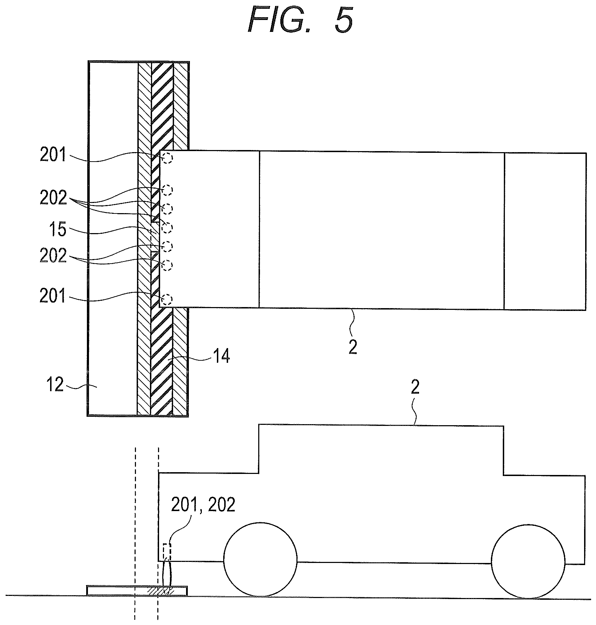

The stop line detection magnetic sensors 201 and the stop line position measurement magnetic sensors 202 which are magnetic sensors for detecting the stop line shown in Fig. 4 will be described referring to Fig. 5.

Referring to Fig. 5, when the stop line detection magnetic sensors 201 installed in the vehicle 2 detect the magnetic detection mark 14 at a timing when the front end of the vehicle 2 comes to the position above the stop line, the vehicle control unit 27 (installed in the vehicle 2 as shown in Fig. 4, but not shown in Fig. 5) serves to stop the vehicle 2.

The stop line position measurement magnetic sensors 202 detect the position detection reference portion 15 after stopping the vehicle. The position and direction of the stop line are obtained by the stop line position measurement unit 20 based on the detection result, vehicle self-location positioned by the positioning unit 32 upon the detection, and the vehicle self-location obtained when the left and right stop line detection magnetic sensors 201 detect the magnetic detection mark 14.

The TV camera 31 is used for improving accuracy of detection with respect to the obstacle position as well as recognition of the stop line.

The vehicle control unit 27 rotates the front wheel steering motor 28 and the rear wheel drive motor 29 at speeds in accordance with a vehicle speed instruction value and a steering instruction value output from the control amount arithmetic unit 26.

For example, as the vehicle self-location positioned by the positioning unit 32 approaches the stop line position, the control amount arithmetic unit 26 calculates the control amount so that the stop line position measurement magnetic sensors 202 reach the position above the position detection reference portion 15 of the stop line while controlling the vehicle to gradually decelerate.

A series of operations of the example will be described.

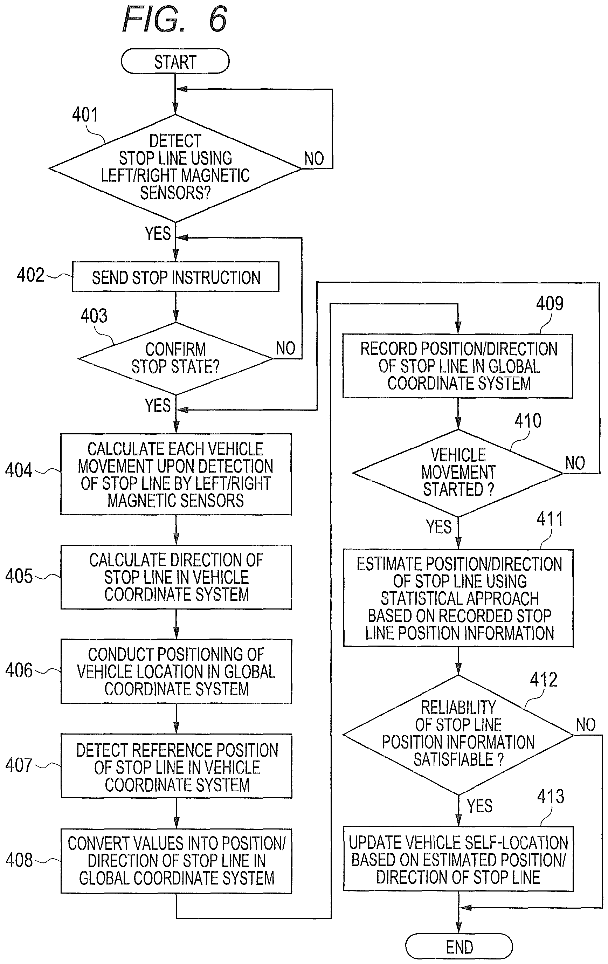

Fig. 6 is an explanatory view which represents the position estimation of the stop line that contains magnetic particles, and the vehicle self-location estimation using the stop line according to the example. The process for estimating the stop line position is executed in accordance with the flowchart shown in Fig. 6.

When the left and right magnetic sensors installed in the vehicle detect the stop line in step 401 upon start of the process for estimating the stop line position, the control amount arithmetic unit 26 sends a stop instruction to the vehicle control unit 27 in step 402 so as to stop the vehicle.

When the vehicle state estimation unit 25 confirms the stop state of the vehicle in step 403, displacements xₗ, xᵣ, and revolving angles ₗ, ᵣ of the vehicle which moves from the time point when the left and right stop line detection magnetic sensors 201 detect the stop line in step 401 are calculated, respectively in step 404.

In step 405, a direction of the stop line in the vehicle coordinate system is derived from the calculated values. Then in step 406, the vehicle location in the global coordinate system is measured using the positioning unit 32.

In step 407, the stop line position measurement magnetic sensors 202 detect the position detection reference portion 15 as the reference position of the stop line in the vehicle coordinate system as shown in Fig. 5.

The direction and position of the stop line in the vehicle coordinate system obtained in steps 405 and 407 are converted into values in the global coordinate system in step 408 based on the positioned results derived from the positioning unit 32. The converted values are stored in the environmental information recording unit 24 together with those data of positioning accuracy, number of observation satellites and positioning accuracy deterioration factor (DOP) in step 409. It is determined whether or not the vehicle starts moving in response to the instruction of the control amount arithmetic unit 26 to move the vehicle. The process will be repeatedly executed from steps 404 to 410 until the control amount arithmetic unit 26 sends the instruction to move the vehicle.

When the vehicle starts moving, the data recorded in the environmental information recording unit 24 are integrated in step 411. The position and direction of the stop line are estimated through such statistical approach as maximum likelihood estimation by selecting a reference, for example, (a) large number of observation satellites, (b) small value of positioning accuracy deterioration factor (DOP), (c) satellite constellation convenient in terms of positioning accuracy, (d) absence of adjacent obstacle upon observation, and (e) fine weather.

In step 412, it is determined with respect to sufficient number of times for conducting the measurement and high reliability with respect to the estimated position and direction of the stop line. Only when it is determined that the reliability is satisfactory, the process proceeds to step 413 where the vehicle self-location is updated based on the measured and estimated position and direction of the stop line, and the process for estimating the stop line position ends.

This makes it possible to obtain the vehicle self-location in the global coordinate system while having the accuracy uninfluenced by the weather and satellite constellation.

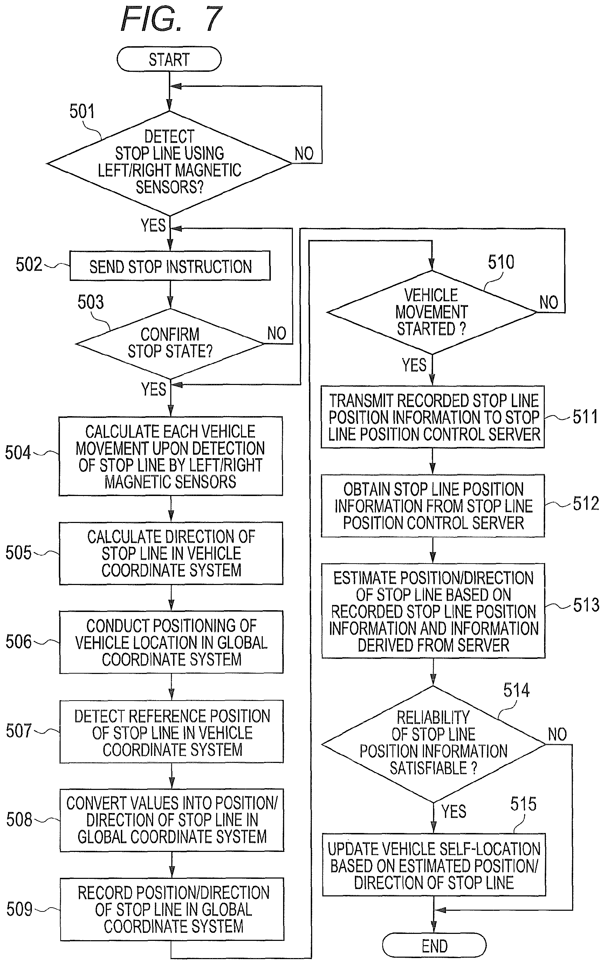

The process for estimating the position of the stop line when applying a plurality of vehicles will be described in accordance with the flowchart of Fig. 7. Fig. 7 is an explanatory view that represents integration of positions of the stop line that contains magnetic particles, which have been derived from the plurality of vehicles, and the vehicle self-location estimation using the stop line according to the example.

The process from steps 501 to 510 in the flowchart of Fig. 7 is the same as the process from steps 401 to 410 in the flowchart of Fig. 6. In step 511, recorded position information of the stop line is transmitted to the stop line position control server 99 by the communication unit 21. In step 512, the stop line position information derived from the other vehicle is obtained. In step 513, the record of the stop line position information individually derived from the vehicle 2 is integrated with the record of the stop line position information derived from the stop line position control server 99 so as to improve estimation accuracy with respect to the position and direction of the stop line. In step 514, it is determined whether the number of conducted measurements is sufficiently large, and reliability of estimated values of position and direction of the stop line is satisfactory. Only when it is determined that the reliability is satisfactory, the vehicle self-location is updated based on the measured and estimated position and direction of the stop line, and the process for estimating the stop line position ends.

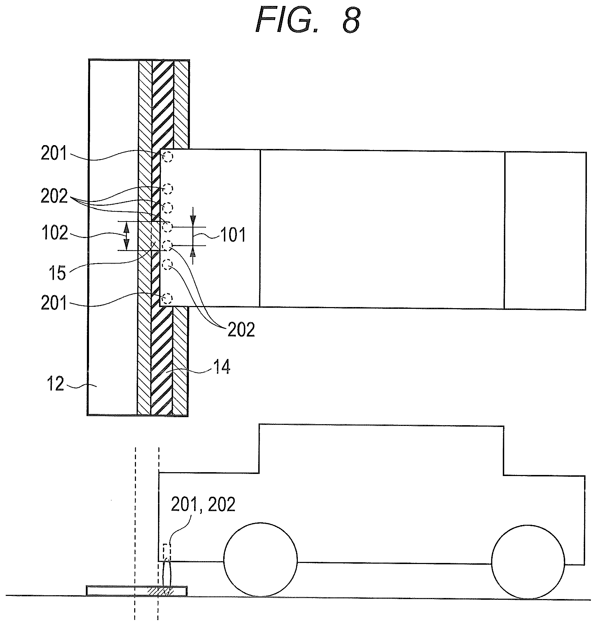

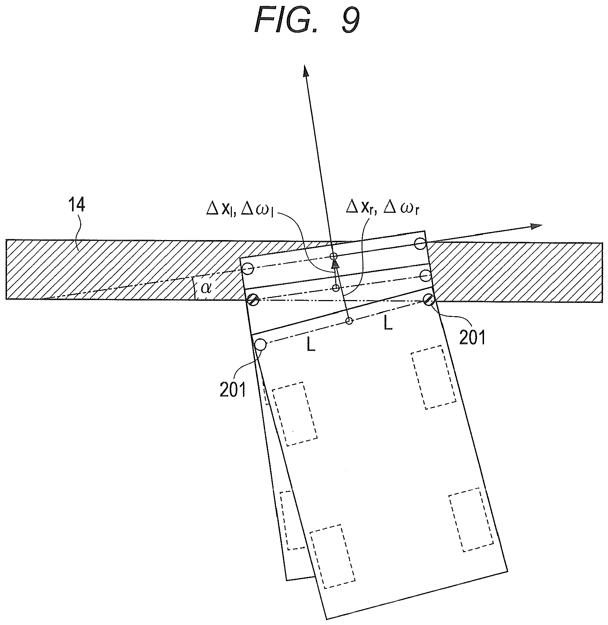

Measurement of the position of the stop line will be executed as illustrated in Figs. 8 and 9. Fig. 8 is an explanatory view of a method for measuring the position of the stop line which contains the magnetic particles according to the example. Referring to Fig. 8, the stop line position measurement magnetic sensors 202 detect the position detection reference portion 15 after stopping the vehicle. In this case, a width 102 of the position detection reference portion 15 has to be wider than an interval 101 between the sensors.

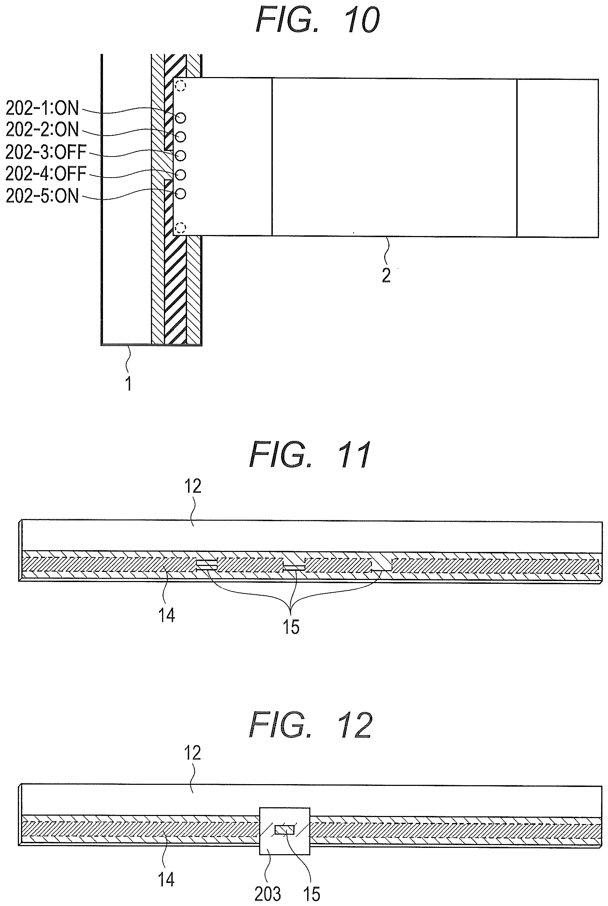

In case of the state shown in Fig. 10, based on the detection results of the stop line position measurement magnetic sensors 202-1 to 202-5, the midpoint between 202-3 and 202-4 is set as the position of the position detection reference portion 15. Measurement is conducted by setting the position of the position detection reference portion 15 as the stop line position.

Only when excessive number of the stop line position measurement magnetic sensors 202 are used to detect magnetism of the magnetic detection mark 14, the stop line position and the vehicle self-location may be updated. This makes it possible to improve reliability of the stop line detection.

Fig. 9 is an explanatory view of a method for measuring the direction of the stop line which contains magnetic particles according to the example. Referring to Fig. 9, the direction of the stop line may be easily obtained by using the displacement values x₁, xᵣ, and revolving angles ₁ and ᵣ of the vehicle which has moved from the time point when the left and right stop line detection magnetic sensors 201 detect the stop line.

According to the example, detection of the stop line which contains magnetic particles ensures to locate the stop line in such environmental conditions as rain and snow, or in the state covered with fallen leaves. The vehicle self-location may be corrected so long as the vehicle passes over the region around the stop line. This makes it possible to obtain the vehicle self-location in the global coordinate system irrespective of such factors as weather and satellite constellation of GNSS.

### Example 2

Example 2 will be described referring to Fig. 11. Fig. 11 is an explanatory view of the structure of the stop line according to Example 2. In this example, the position detection reference portion 15 of the stop line exemplified in Example 1 is formed as the structure having a plurality of coded horizontal lines as shown in Fig. 11. The drawing further shows an exemplified structure where a plurality of position detection reference portions 15 each with different code are arranged in the stop line magnetic detection mark 14 of the stop line. This ensures to allow the stop line to have a plurality of the position detection reference portions 15, thus reducing the number of the stop line position measurement magnetic sensors 202.

The coded magnetic pattern may be used not only for the position measurement but also recording of additional information such as the road width and the distance to the next intersection.

The position detection reference portion 15 may be formed of a ferromagnetic body for forming the magnetic pattern through magnetization so that the recorded information is rewritten.

### Example 3

Example 3 will be described referring to Fig. 12. Fig. 12 is an explanatory view representing a relationship between the stop line structure and the magnetic detection sensor according to Example 3. In this example, the stop line position measurement magnetic sensor 202 described in Example 1 will be exemplified by a magnet viewer 203 for visualizing the magnetic pattern as shown in Fig. 12. In this example, the magnet viewer pressed against the stop line is captured by the TV camera 31 so that the position and direction of the stop line in the vehicle coordinate system may be detected based on the camera image in step 407 as shown in Fig. 6.

The magnetic pattern may be used not only for the position measurement but also recording of additional information such as the road width and the distance to the next intersection.

The position detection reference portion 15 may be formed of the ferromagnetic body for forming the magnetic pattern through magnetization so that the recorded information is rewritten.

The aforementioned approach makes it possible to improve the stop line position measurement accuracy.

### Example 4

Example 4 will be described as a modified example of Example 3. In this example, the magnetic particles are contained in the visual mark 12 of the stop line as exemplified in Example 1. If the stop line cannot be visually confirmed by the TV camera, it is determined whether the stop line has a failure or it is merely stained based on the response of the magnetic sensor. In this example, if there is no response from the magnetic sensor, it is determined that the stop line has the failure so that it is installed again.

This makes it possible to improve reliability of research with respect to the failure of the stop line, thus appropriately setting the maintenance timing.

### Example 5

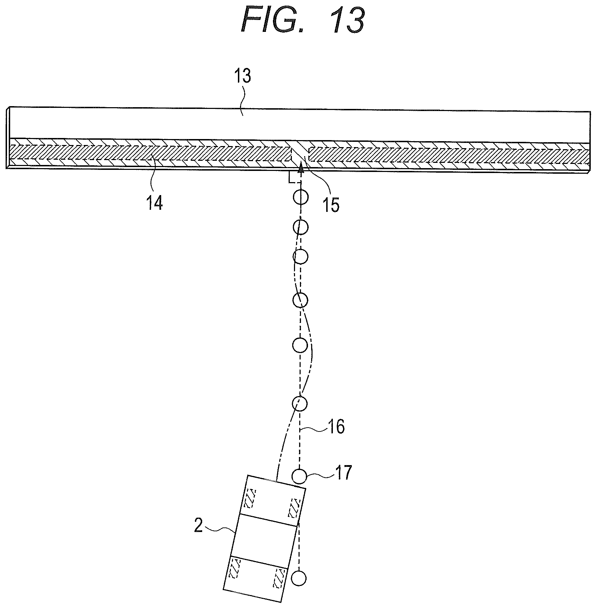

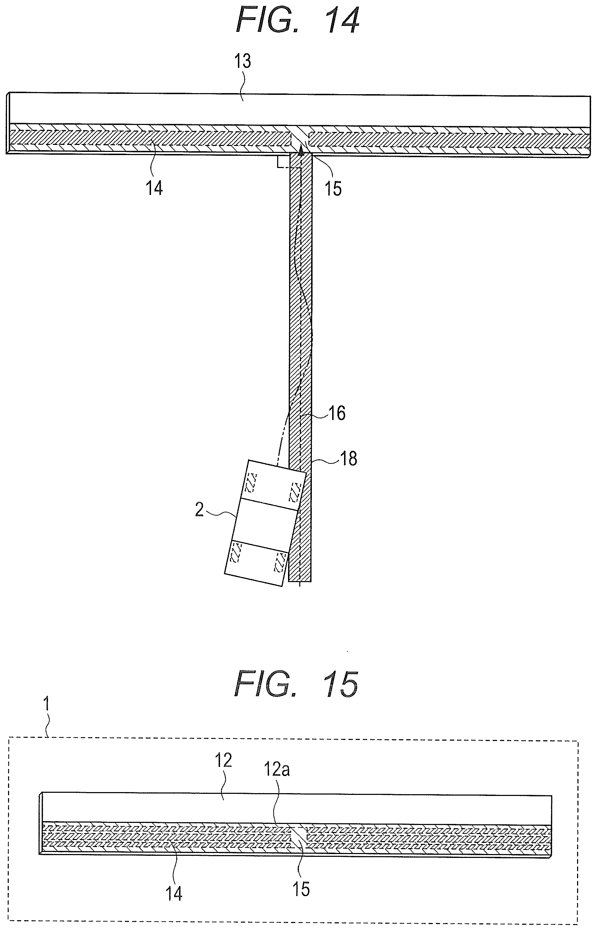

Example 5 will be described referring to Fig. 13 or 14. Fig. 13 is an explanatory view of a magnetic nail for guiding the vehicle to the stop line according to Example 5. Fig. 14 is an explanatory view of the magnetic line for guiding the vehicle to the stop line according to Example 5. In this example, referring to Fig. 13 or 14, a magnetic nail 17 or a magnetic line 18 is provided on a straight line 16 normal to the stop line to its front as described in Example 1. The magnetic line is formed of the same material as the one for forming the magnetic detection mark 14.

They are detected by the stop line detection magnetic sensor 201 so that the vehicle control unit 27 controls the vehicle 2 to travel along the straight line 16.

In this way, the stop line position measurement magnetic sensors 202 are capable of controlling the vehicle to be positioned over the position detection reference portion 15 of the stop line. This makes it possible to reduce the number of the stop line position measurement magnetic sensors 202 compared with Example 1.

Preferably, the vehicle control unit 27 controls the vehicle 2 to gradually decelerate as it approaches the stop line so that the stop line position measurement magnetic sensors 202 are brought into close to the position detection reference portion 15 of the stop line when the vehicle is stopped. At this timing, the vehicle 2 may be smoothly guided to the position detection reference portion 15 by reducing the interval between the magnetic nails 17 as it approaches the stop line.

### Example 6

Example 6 will be described as a modified example of Example 5. In this example, a parting line which contains the magnetic particles or the magnetic body as described in Example 1 is provided so that magnetism at each position on the road is preliminarily detected and recorded using the stop line detection magnetic sensor which continuously outputs values or outputs a plurality of values. Comparison is made between the recorded values and the detection results of the stop line detection magnetic sensor upon actual traveling of the vehicle for estimating the distance from the parting line. The vehicle control unit 27 controls the vehicle 2 so that the stop line position measurement magnetic sensor 202 passes over the position detection reference portion 15 of the stop line while having the distance from the parting line constant.

This makes it sure to control the stop line position measurement magnetic sensors 202 to be positioned over the position detection reference portion 15 of the stop line, thus reducing the number of the stop line position measurement magnetic sensors 202 compared with Example 1.

Preferably, the vehicle control unit 27 controls the vehicle to gradually decelerate as it approaches the stop line for the purpose of bringing the stop line position measurement magnetic sensors 202 close to the position detection reference portion 15 of the stop line when the vehicle is stopped. It is preferable to record additional information, for example, change in the magnetic pattern in accordance with the distance from the stop line in case of mixture of the magnetic body.

### Example 7

Example 7 will be described as a modified example of Example 6. In this example, geomagnetism of the region to the front of the stop line shown in Example 1 is detected and recorded using the stop line detection magnetic sensor which continuously outputs values or outputs a plurality of values. Comparison is made between the recorded values and the detection results of the stop line detection magnetic sensor upon actual traveling of the vehicle for estimating the vehicle location in the coordinate system in reference to the stop line.

This ensures the vehicle to be directed normal to the stop line, and the stop line position measurement magnetic sensors 202 to pass over the position detection reference portion 15 of the stop line. The number of the stop line position measurement magnetic sensors 202 may be reduced compared with Example 1.

It is preferable to control the vehicle to gradually decelerate as it approaches the stop line for reducing the braking distance after detecting the stop line.

### Example 8

Referring to Fig. 15, Example 8 will be described as a modified example of the stop line 1 described in Example 1.

The stop line 1 includes the visual mark 12 formed by applying the same white paint as the generally employed road mark on the road surface, and a magnetic detection mark 14 having a line extending in parallel with the long side 12a of the visual mark 12, which is formed by mixing the paint of the same color type as that of the road surface and magnetic particles.

The magnetic detection mark 14 includes the position detection reference portion 15 which does not contain magnetic particles for indicating the longitudinal reference position, and is designed to be detected by the stop line position measurement magnetic sensors 202 shown in Fig. 1. In this example, the magnetic detection marks 14 are arranged in a plurality of rows as shown in Fig. 15.

The number of the magnetic detection marks 14 over which the stop line detection magnetic sensor 201 has passed is counted to measure the position in the direction normal to the stop line. At this time, it is preferable to alternately provide S-pole and N-pole as the magnetic poles on the surface in order to conduct highly reliable measurement.

### Example 9

In Example 1, the road mark other than the stop line such as vehicular section and traveling direction contains magnetic particles or magnetic body. Every time the vehicle passes over those road marks, the position information of the road mark is measured so that the recorded position information of the road mark is transmitted to the server by the communication unit 21 for obtaining the position information of the road mark from the other vehicle. The recorded road mark position information individually obtained by the vehicle 2 is integrated with the recorded road mark position information derived from the stop line position control server 99 for improving estimation accuracy with respect to the position and direction of the road mark. Then the vehicle self-location may be updated based on the position and direction of the estimated stop line.

Preferably, the information such as the distance to the stop line is added to the arrangement pattern of the magnetic particles and the magnetizing pattern of the magnetic body.

This ensures to easily direct the vehicle normal to the stop line, and to control the stop line position measurement magnetic sensors 202 to pass over the position detection reference portion 15 of the stop line, thus allowing reduction in the number of the stop line position measurement magnetic sensors 202 compared with Example 1.

The cruise assist system for vehicle ensures detection of the stop line position to stop the vehicle even in the case where existence of the stop line cannot be determined based on the captured image of the road surface, and updates the vehicle self-location in reference to the stop line position. For example, the magnetic particles are contained in the stop line so as to conduct measurement every time the vehicle stops at the stop line. Measurement results of the stop line position based on the GPS positioning are integrated to improve accuracy of the estimated position of the stop line. Meanwhile, the system is further structured to estimate the vehicle self-location based on the estimated position of the stop line.

The present invention is not limited to the above-described examples, but includes various modified examples. For instance, the examples are described in detail for clarifying the present invention, and are not necessarily limited to the system provided with all the components as described above. The structure of the example may be partially replaced with that of the other example. The structure of another example may also be added to that of the example. The structure of each of the examples may be partially subjected to addition, deletion and replacement of the other structure.

At least a part of the respective structures, functions, processing units, and processing approaches may be realized by hardware by designing through the integrated circuit, for example. Those structures, functions and the like may be realized by software by interpreting and executing the program for realizing the respective functions. Information with respect to the program, table and file for realizing the respective functions may be stored in the recording unit such as the memory, hard disk and SSD (Solid State Drive), or the recording medium such as the IC card, SD card and DVD.

The examples show the control line and information line considered as necessary for the explanation, which does not necessarily show all the control lines and information lines of the product. Actually, almost all the components may be considered to be connected with one another.

The above embodiments of the invention as well as the appended claims and figures show multiple characterizing features of the invention in specific combinations. The skilled person will easily be able to consider further combinations or subcombinations of these features in order to adapt the invention as defined in the in the claims to his specific needs.

## Claims

1. A method for forming a road mark (1) comprising:
forming a visual mark (12) by applying a first paint on a road surface;
forming a magnetic detection mark (14) by mixing a second paint and magnetic particles; and
externally magnetizing the magnetic particles;
**characterized by** further comprising the step of forming a position detection reference portion (15) in the magnetic detection mark (14), which does not contain the magnetic particles for indicating a longitudinal reference position;
and in that the second paint is of a same color type as that of the road surface and magnetic particles, the second paint having a surface reflectance lower than that of the first paint, whereas the first paint is of a color different from that of the road surface.

2. The method according to claim 1, wherein the magnetic detection marks (14) are arranged to form a plurality of band-like shapes.

3. The method according to claim 3, wherein the magnetic detection mark (14) includes a coded magnetic pattern for recording additional information.

## Patentansprüche

1. Verfahren zur Anfertigung einer Straßenmarkierung (1) mit den Schritten:
Anfertigen einer sichtbaren Markierung (12) durch Anbringen einer ersten Farbe auf der Straßenoberfläche,
Anfertigen einer Markierung (14) zur magnetischen Erfassung durch Mischen einer zweiten Farbe und magnetischer Partikel, und
Magnetisieren der magnetischen Partikel von außen,
**dadurch gekennzeichnet, dass** das Verfahren ferner den Schritt aufweist, in der Markierung (14) zur magnetischen Erfassung einen Positionserfassungs-Referenzabschnitt (15) auszubilden, der die magnetischen Partikel nicht enthält, um eine Referenzposition in Längsrichtung anzuzeigen, und
dadurch, dass die zweiten Farbe vom gleichen Farbtyp ist wie die der Straßenoberfläche und der magnetischen Partikel, wobei die zweite Farbe ein Oberflächenreflexionsvermögen hat, das kleiner ist als das der ersten Farbe, wobei die erste Farbe einen Farbton aufweist, der von dem der Straßenoberfläche verschieden ist.

2. Verfahren nach Anspruch 1, wobei die Markierungen (14) zur magnetischen Erfassung angeordnet sind, um eine Mehrzahl von bandartigen Formen zu bilden.

3. Verfahren nach Anspruch 3, wobei die Markierung (14) zur magnetischen Erfassung ein kodiertes magnetisches Muster zum Aufzeichnen zusätzlicher Informationen aufweist.

## Revendications

1. Procédé de formation d'une marque de route (1) comprenant :
la formation d'une marque visuelle (12) en appliquant une première peinture sur une surface de route ;
la formation d'une marque de détection magnétique (14) en mélangeant une deuxième peinture et des particules magnétiques ; et
la magnétisation par l'extérieur des particules magnétiques ;
**caractérisé en ce que** comprenant en outre l'étape de formation d'un point de référence (15) de détection de position dans la marque de détection magnétique (14), qui ne contient pas les particules magnétiques, pour indiquer une position de référence longitudinale ; et **en ce que** la deuxième peinture est d'un même type de couleur que celui de la surface de route et des particules magnétiques, la deuxième peinture ayant un facteur de réflexion de surface inférieur à celui de la première peinture, tandis que la première peinture est d'une couleur différente de celle de la surface de route.

2. Procédé selon la revendication 1, dans lequel les marques de détection magnétique (14) sont agencées pour former une pluralité de formes de type bandes.

3. Procédé selon la revendication 3, dans lequel la marque de détection magnétique (14) inclut un motif magnétique codé pour enregistrer des informations additionnelles.
